# EUROPÄISCHE PATENTSCHRIFT

(11) **EP 0 932 528 B1**
(45) Veröffentlichungstag und Bekanntmachung des Hinweises auf die Patenterteilung: **11.07.2001**
(21) Anmeldenummer: 97912157.1
(22) Anmeldetag: 09.10.1997
(51) Int. Cl.: B60R 21/22, B60R 21/16, B60R 21/18

(54) **PASSIVES RÜCKHALTESYSTEM FÜR EIN KRAFTFAHRZEUG**
PASSIVE RETENTION SYSTEM FOR MOTOR VEHICLES
SYSTEME DE RETENUE PASSIF POUR VEHICULE A MOTEUR

(30) Priorität: 10.10.1996 DE 19641670
(43) Veröffentlichungstag der Anmeldung: 04.08.1999
(73) Patentinhaber: Siemens Restraint Systems GmbH, 63755 Alzenau (DE)
(72) Erfinder: AMANN, Christian, D-81371 München (DE)
(74) Vertreter: Fuchs Mehler Weiss & Fritzsche
(86) Internationale Anmeldenummer: EP9705567
(87) Internationale Veröffentlichungsnummer: WO9815433

(56) Entgegenhaltungen:
- WO-A-95/19899
- DE-A- 2 037 565
- US-A- 5 556 129

## Beschreibung

Die Erfindung betrifft ein passives Rückhaltesystem für ein Kraftfahrzeug, welches wenigstens ein einem Fahrzeugsitz zugeordnetes Airbagmodul zum seitlichen Schutz des Kopfes und ggf. des Kopf-Thorax-Bereiches einer in dem Fahrzeugsitz sitzenden Person aufweist. Das Airbagmodul weist wenigstens einen Gasgenerator und einen Gassack auf, in den der Gasgenerator auf ein Auslösesignal hin schlagartig Gas einleitet. Es wird davon ausgegangen, daß die Person zusätzlich mit einem üblichen Sicherheitsgurt gesichert ist.

Ein derartiges System ist bekannt aus der WO-A-95/19899 sowie aus der US-A-5 556 129. Die erstgenannte Druckschrift beschreibt ein Rückhaltesystem, bei dem der erwähnte Sicherheitsgurt in der Struktur des Fahrzeugs verankert ist, also beispielsweise in der B- bzw. C-Säule. Die letztgenannte Druckschrift hingegen betrifft den Fall, daß der Sicherheitsgurt im Fahrzeugsitz integriert ist.

Der Seitenaufprallschutz steht seit einiger Zeit im verstärkten Interesse der mit der Herstellung von Kraftfahrzeugen beschäftigten Industriezweige. Es gibt bereits Fahrzeuge, die serienmäßig über sogenannte Seitenairbags verfügen. Nur beispielhaft seien typische Seitenairbagkonstellationen erwähnt. So ist z.B. aus der EP-Al 0 560 501 ein System bekannt, bei dem einem Fahrzeugsitz ein separater Airbag für den Thoraxbereich und ein weiterer Airbag für den Kopfbereich zugeordnet ist. Ein kombinierter Kopf-Thorax-Airbag ist bekannt geworden aus der nicht vorveröffentlichten deutschen Patentanmeldung 195 29 829 der Anmelderin. Darin wird vorgeschlagen, einen zwei Kammern umfassenden Gassack an der Seite des Sitzes, dem das Modul zugeordnet ist, im Aufprallfalle aufzublasen. Eine der Kammern ist dabei dem Kopfbereich und die andere Kammer dem Thoraxbereich der auf dem betreffenden Sitz sitzenden Person zugeordnet.

Im Falle eines Seitenaufpralls eines anderen Fahrzeugs durchtritt der Vorderwagen des Unfallgegners typischerweise zunächst den unteren Türbereich, wodurch der Beckenbereich des betroffenen Fahrzeuginsassen in Richtung auf das Fahrzeuginnere geschoben wird. Typischerweise zerbersten die Glasscheiben der Türen und die Seitenairbags werden aufgeblasen. Der Kopf- und Thoraxbereich macht dann eine Ausweichbewegung in Richtung auf den aufgeblasenen Kopfairbag oder Kopf-Thorax-Airbag. Hier nun besteht die Gefahr, daß aufgrund des Auftreffens des Kopfes auf den Airbag dieser durch die nun glaslose Fensteröffnung hindurch nach außen pendelt. Der Kopf des Fahrzeuginsassen erfährt hierdurch aufgrund des fehlenden Widerstandes eine starke Nickbewegung, die zu Schädigungen im Halsbereich führen können, die Spätfolgen wie Migräneprobleme und anderes nach sich ziehen können. Die dargestellte Problematik ergibt sich im übrigen stets bei offenen Fahrzeugen wie Cabriolets, die über keine obere Stützstruktur verfügen, oder aber auch bei geschlossenen Fahrzeugen mit geöffneten Seitenfenstern.

Vor dem aufgezeigten Hintergrund ist es die Aufgabe der vorliegenden Erfindung, ein passives Rückhaltesystem der eingangs genannten Art so weiterzubilden, daß dafür Sorge getragen ist, daß der Kopf und ggf. der Kopf-Thorax-Bereich des betroffenen Fahrzeuginsassen im Falle eines Seitenaufpralls des Kraftfahrzeugs im wesentlichen innerhalb der Fahrzeugkontur verbleibt.

Gelöst wird diese Aufgabe durch ein Rückhaltesystem gemäß dem Anspruch 1 bzw. Anspruch 2. Weitere vorteilhafte Weiterbildungen ergeben sich aus den Unteransprüchen.

Der erste Lösungsvorschlag betrifft den Fall, daß der Sicherheitsgurt in der Struktur des Fahrzeugs verankert ist, also in der B- oder C-Säule, wie in der schon genannten WO-A-95/19899 vorgesehen ist. Es wird vorgeschlagen, daß der Gassack des Airbagmoduls so angeordnet ist und eine solche Form aufweist, daß er den Sicherheitsgurt, dem sofort nach dem Auftreten des Auslösesignals eine Gurtlose verliehen wird, fängt, ihn aus der Anlageposition an der Person heraus abhebt und mit zunehmendem Volumen die Gurtlose aufzehrt, so daß der Sicherheitsgurt den Gassack in dessen vollaufgeblasenem Zustand an einem seitlichen, auswärts gerichteten Auspendeln hindert, derart, daß der Kopf und ggf. der Kopf-Thorax-Bereich der Person nach Berührung mit dem Gassack die Konturen der Fahrgastzelle des Kraftfahrzeuges im wesentlichen nicht verläßt.

Mit anderen Worten sieht das System vor, daß sofort nach der Generierung des Auslösesignals für das Airbagmodul dem Sicherheitsgurt eine je nach Fahrzeugtyp festzulegende, ggf. vorgebbare Gurtlose verliehen wird, der Sicherheitsgurt also um eine (vorgebbare) Länge, beispielsweise um 30 oder 40 cm, verlängert wird. Der Gassack ist nun so angeordnet und ausgeformt, daß er mit zunehmendem Volumen den Sicherheitsgurt erfaßt oder fängt und diesen von der Anlageposition an der Person nach außen hin abhebt. Dabei wird die Gurtlose des Sicherheitsgurtes aufgezehrt, so daß der Gassack im vollaufgeblasenen Zustand den Sicherheitsgurt trotz der zuvor verliehenen Gurtlose wieder spannt. Der Sicherheitsgurt seinerseits hindert nun den Gassack an einem seitlichen auswärts gerichteten Auspendeln, und zwar so, daß der Kopf und der Kopf-Thorax-Bereich auch nach Berührung mit dem Gassack innerhalb der Konturen des Fahrzeuges verbleibt.

Der Gassack kann zur Durchführung des Fangvorganges des Sicherheitsgurtes beispielsweise eine Art V-Form aufweisen, die nach schräg oben hin geöffnet ist und zwei seitliche Schenkel aufweist. Der Sicherheitsgurt wird dann durch die beiden Schenkel des Gassackes an der Basis des V-förmigen Gassackes zur Anlage kommen. Die angesprochene V-Form ist allerdings nur eine ganz spezielle Ausführungsform. Wesentlich ist die Abstimmung zwischen dem Volumen des Gassackes und der zu verleihenden Gurtlose. Dies sind die beiden Parameter, mittels derer das System so eingestellt werden kann, daß der Sicherheitsgurt selbst den aufgeblasenen Gassack innerhalb der Fahrzeugkonturen hält.

Der zweite Lösungsvorschlag betrifft nun den Fall, daß der Sicherheitsgurt nicht mehr in der Fahrzeugstruktur verankert ist, sondern im Fahrzeugsitz integriert ist, wie in der schon genannten US-A-5 556 129 vorgesehen ist. In diesem Falle braucht der Sicherheitsgurt nicht mehr gefangen zu werden. Es wird nämlich vorgeschlagen, daß der Gassack so angeordnet und eine solche

Form aufweist, daß er im befüllten Zustand den Raum zwischen dem sofort nach dem Auftreten des Auslösesignals mit einer Gurtlose versehenen Sicherheitsgurt und der Person weitgehend ausfüllt und die Gurtlose aufzehrt, so daß der Sicherheitsgurt den Gassack in dessen vollaufgeblasenem Zustand an einem seitlichen, auswärts gerichteten Auspendeln hindert, derart, daß der Kopf und ggf. der Kopf/Thorax-Bereich der Person nach Berührung mit dem Gassack die Konturen der Fahrgastzelle des Kraftfahrzeuges im wesentlichen nicht verläßt.

Besonders bevorzugt wird in dem vorerwähnten Fall die Anordnung des Gassackes im Bereich der Austrittsstelle des Sicherheitsgurtes aus der Sitzlehne. An der Austrittsstelle ist üblicherweise ein Blendring, durch den hindurch der Gurt geführt ist, angeordnet. Mit diesem Blendring kann der Gassack vernäht sein, so daß nach Auslösung des Airbagmoduls dieser Ring aus seiner Halterung in der Sitzlehne weggesprengt wird. Durch die Formgebung des Gassackes kann vorgegeben sein, daß der Blendring beispielsweise nach vorne weggesprengt wird. Dieser Blendring umschließt aber weiterhin den Sicherheitsgurt, so daß es - wie erwähnt - eines Einfangen des Gurtes durch den Gassack nicht bedarf.

Ein wichtiger Aspekt beider Lösungsvorschläge ist die Verleihung der Gurtlose. Diese ist bevorzugt vorgebbar, also steuerbar. Es ist aber auch denkbar, diejenige Gurtlose heranzuziehen, die durch den Seitenaufprall ohnehin aufgrund der Intrusion der B-Säule in das Fahrzeuginnere entsteht. Letzteres trifft freilich nur bei Sicherheitsgurten zu, die mit der Struktur des Fahrzeugs verankert sind. Bevorzugt wird allerdings die vorgebbare Gurtlose: Üblicherweise verläuft der Sicherheitsgurt in einem Kraftfahrzeug bekannterweise von einem Gurtaufroller über die B-Säule und dem D-Ring (am oberen Umlenkpunkt) über die Brust des Kraftfahrzeuginsassen hin zum Gurtschloß, wenn der Gurt an der Struktur des Fahrzeugs verankert ist. Beim sitzintegrierten Sicherheitsgurt tritt er aus der Sitzlehne heraus und verläuft über die Brust des Kraftfahrzeuginsassen zum Gurtschloß. Auch der sitzintegrierte Sicherheitsgurt verfügt über einen Gurtaufroller, der im unteren Sitzlehnenbereich angeordnet sein kann.

Gemäß einem erfindungsgemäßen Vorschlag ist vorgesehen, daß das passive Rückhaltesystem einen Aktuator aufweist, welcher über den Gurtaufroller des Sicherheitsgurtes diesem durch Deaktivierung seines Blockiermechanismus sofort nach Auftreten des Auslösesignals, womit das Aufblasen des Gassackes bewirkt wird, die vorgebbare Gurtlose verleiht und danach den Blockiermechanismus des Gurtaufrollers wieder aktiviert. Der Aktuator kann ein elektronisches Stellglied sein. Klar ist, daß alle diese Aktionen innerhalb der kürzesten Zeit ablaufen müssen, also beispielsweise im Bereich von 10 bis 30 msec.

Die Erfindung gestattet es gemäß weiterer vorteilhafter Ausführungsformen, daß der Gassack in der Struktur des Fahrzeuges integriert ist, also beispielsweise in der Innenverkleidung der Fahrzeugtür, aber auch, daß er im Fahrzeugsitz integriert ist. Letzteres wird besonders bevorzugt, wenn auch der Sicherheitsgurt im Sitz integriert ist, da damit die erläuterte Funktion des Blendringes hinsichtlich der Führung des Sicherheitsgurtes gewährleistet ist.

Die Erfindung wird anhand eines Ausführungsbeispiels gemäß der Zeichnungsfiguren näher erläutert. Hierbei zeigt:
- Figuren 1 bis 6: die zeitliche Abfolge der Reaktion des Rückhaltesystems innerhalb eines Fahrzeuges nach Auftreten eines Seitenaufpralls, jeweils schematisch von vorne dargestellt, und
- Figur 7: eine perspektivische Ansicht der Situation entsprechend Figur 6.

In allen Zeichnungsfiguren sind dieselben Teile mit denselben Bezugszeichen versehen.

Dargestellt ist ein passives Rückhaltesystem mit einem im Fahrzeugsitz 2 integrierten Gassack 1 sowie mit einem in der Struktur des Fahrzeugs verankerten Sicherheitsgurt 5.

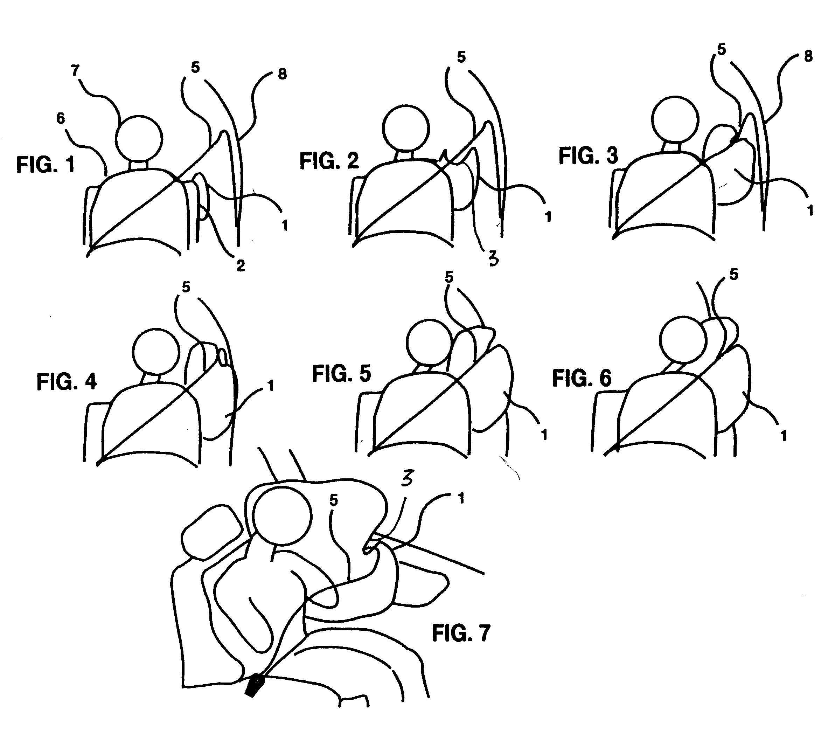

In Figur 1 dargestellt ist die Situation im Kraftfahrzeuginneren kurz, d.h. ca. 10 msec nach dem Eintritt des Aufpralls auf die Fahrerseite. Das Auslösesignal für den Gasgenerator ist bereits generiert worden, welcher daraufhin mit der Befüllung des Gassackes 1 begonnen hat. Die auf dem Sitz sitzende Person 6 ist zusätzlich über den Sicherheitsgurt 5 gesichert. Die erwähnte Gurtlose ist in dieser Situation noch nicht erkennbar.

In Figur 2 hingegen ist dargestellt, wie dem Sicherheitsgurt 5 eine Gurtlose verliehen worden ist, indem der Gassack 1, der gerade aufgeblasen wird, den aufgrund eines Mechanismus zu diesem Zeitpunkt gegen ein Ausrollen nicht mehr blockierten Gurt für eine vorgebbare Zeitspanne auszieht, bevor der Blockiermechanismus des Gurtaufrollers wieder aktiviert wird. Das Volumen des Gassackes 1 hat gegenüber der Figur 1 durch weitere Befüllung mit Gas zugenommen. Im weiteren zeitlichen Verlauf (Figur 3) kommt der Gassack zur Anlage an den Sicherheitsgurt 5 und fängt ihn in einem V-förmigen Ausschnitt 3. Dies führt dazu, daß der Sicherheitsgurt 5 von der Anlageposition an der Person 6 abgehoben wird (Figur 3, 4). Etwa im Zeitpunkt, der in Figur 5 dargestellt ist, ist der Gassack auf sein maximales Volumen aufgeblasen. In diesem Zeitpunkt wird der Blockiermechanismus des Gurtaufrollers wieder aktiviert und der Gurt 5 ist wieder gestrafft.

Der Kopf 7 der Person 6 bewegt sich aufgrund der herrschenden Kräfte in Richtung auf den Gassack 1 zu, wo er schließlich hineintaucht (Figur 6). In diesem Moment muß das Rückhaltesystem seine maximale Schutzwirkung ausüben, d.h. die Gurtlose ist vollkommen verzehrt aufgrund des Volumens des Gassackes zwischen dem Fahrzeugsitz 2 und dem Gurt 5. Die sichere Fangfunktion des Gassackes ist in dem abgebildeten Ausführungsbeispiel gewährleistet durch die etwas schräg nach oben weisende V-Form (Figur 7) des aufgeblasenen Gassackes. Die Gurtlose sowie der Gassack 1 müssen so aufeinander abgestimmt sein, daß dieser die Fahrgastzelle 8 im wesentlichen nicht verläßt, d.h., daß der Sicherheitsgurt 5 den Gassack 1 davor bewahrt, eine Auspendelbewegung nach außen hin auszuführen.

Durch das erfindungsgemäße System wird erreicht, daß der ohnehin in jedem Kraftfahrzeug vorhandene Sicherheitsgurt 5 als Rückhalteelement für den Gassack 1 fungiert, so daß der Kopf-Bereich der Person 6 ebenfalls im wesentlichen innerhalb der Fahrgastzelle 8 verbleibt.

## Patentansprüche

1. Passives Rückhaltesystem für ein Kraftfahrzeug, aufweisend wenigstens ein einem Fahrzeugsitz (2) zugeordnetes Airbagmodul zum seitlichen Schutz des Kopfes und ggf. des Kopf-Thoraxbereiches einer in dem Fahrzeugsitz (2) sitzenden, mittels eines in der Struktur des Fahrzeugs verankerten Sicherheitsgurtes (5) als zusätzliche passive Rückhaltekomponente gesicherten Person (6) mit wenigstens einem Gasgenerator und einem Gassack (1), in den der Gasgenerator auf ein Auslösesignal hin schlagartig Gas einleitet,
**dadurch gekennzeichnet,**
daß der Gassack (1) so angeordnet ist und eine solche Form aufweist, daß er den Sicherheitsgurt (5), dem sofort nach dem Auftreten des Auslösesignals eine Gurtlose verliehen wird, fängt, ihn aus der Anlageposition an der Person (6) heraus abhebt und mit zunehmendem Volumen die Gurtlose aufzehrt, so daß der Sicherheitsgurt (5) den Gassack (1) in dessen voll aufgeblasenem Zustand an einem seitlichen, auswärts gerichteten Auspendeln hindert, derart, daß der Kopfbereich der Person (6) nach Berührung mit dem Gassack (1) die Konturen der Fahrgastzelle (8) des Kraftfahrzeuges im wesentlichen nicht verläßt.

2. Passives Rückhaltesystem für ein Kraftfahrzeug, aufweisend wenigstens ein einem Fahrzeugsitz (2) zugeordnetes Airbagmodul zum seitlichen Schutz des Kopfes und ggf. des Kopf-Thoraxbereiches einer in dem Fahrzeugsitz (2) sitzenden, mittels eines in dem Kraftfahrzeugsitz (2) integrierten Sicherheitsgurtes als zusätzliche passive Rückhaltekomponente gesicherten Person (6) mit wenigstens einem Gasgenerator und einem Gassack, in den der Gasgenerator auf ein Auslösesignal hin schlagartig Gas einleitet,
**dadurch gekennzeichnet,**
daß der Gassack so angeordnet ist und eine solche Form aufweist, daß er im befüllten Zustand den Raum zwischen dem sofort nach dem Auftreten des Auslösesignals mit einer Gurtlose versehenen Sicherheitsgurt und der Person weitgehend ausfüllt und die Gurtlose aufzehrt, so daß der Sicherheitsgurt den Gassack (1) in dessen voll aufgeblasenem Zustand an einem seitlichen, auswärts gerichteten Auspendeln hindert, derart, daß der Kopfbereich der Person (6) nach Berührung mit dem Gassack (1) die Konturen der Fahrgastzelle (8) des Kraftfahrzeuges im wesentlichen nicht verläßt.

3. Passives Rückhaltesystem nach Anspruch 1 oder 2, welches einen Aktuator aufweist, welcher über den Gurtaufroller des betreffenden Sicherheitsgurtes (5) diesem durch Deaktivierung seines Blockiermechanismus sofort nach Auftreten des Auslösesignals die Gurtlose verleiht und danach den Blockiermechanismus des Gurtaufrollers wieder aktiviert.

4. Passives Rückhaltesystem nach einem der Ansprüche 1 bis 3, bei dem der Gassack (1) in der Struktur des Fahrzeuges integriert ist.

5. Passives Rückhaltesystem nach einem der Ansprüche 1 bis 3, bei dem der Gassack (1) in dem Fahrzeugsitz (2) integriert ist.

## Claims

1. Passive restraint system for a motor vehicle, having at least one airbag module allocated to a vehicle seat (2) for lateral protection of the head and optionally the head-chest region of a person (6) sitting in the vehicle seat (2), by means of a safety belt (5) anchored in the structure of the vehicle as an additional passive restraining component, with at least one gas generator and an airbag (1), into which the gas generator suddenly introduces gas in response to a triggering signal, characterized in that the airbag (1) is so arranged and has such a shape that it catches the safety belt (5) to which slack is imparted immediately after the triggering signal occurs, lifts the belt from its position resting against the person (6) and, with increasing volume, takes up the slack, so that the safety belt (5) hinders the airbag (1) in the fully inflated state of the latter from swinging out laterally in the outward direction, in such a way that the head region of the person (6) essentially does not leave the contours of the passenger compartment (8) of the motor vehicle after contact with the airbag (1).

2. Passive restraint system for a motor vehicle, having at least one airbag module allocated to a vehicle seat (2) for lateral protection of the head and optionally the head-chest region of a person (6) sitting in the vehicle seat (2), by means of a safety belt integrated in the vehicle seat (2) as an additional passive restraining component, with at least one gas generator and an airbag, into which the gas generator suddenly introduces gas in response to a triggering signal, characterized in that the airbag is so arranged and has such a shape that, in the filled state, it largely fills the space between the safety belt, provided with slack immediately after the triggering signal occurs, and the person, and takes up the slack, so that the safety belt hinders the airbag (1) in its fully inflated state from swinging out laterally in an outward direction, in such a way that the head region of the person (6) essentially does not leave the contours of the passenger compartment (8) of the motor vehicle after contact with the airbag (1).

3. Passive restraint system according to Claim 1 or 2, which has an actuator which imparts the predeterminable slack to the safety belt (5) via the belt retractor of the latter by deactivation of its blocking mechanism immediately after the triggering signal occurs, and after that re-activates the blocking mechanism of the belt retractor.

4. Passive restraint system according to one of Claims 1 to 3, in which the airbag (1) is integrated in the structure of the vehicle.

5. Passive restraint system according to one of Claims 1 to 3, in which the airbag (1) is integrated in the vehicle seat (2).

## Revendications

1. Système de retenue passif pour un véhicule à moteur, comportant au moins un module d'airbag associé à un siège (2) de véhicule, pour la protection latérale de la tête et éventuellement de la région tête-thorax d'une personne (6) assise dans le siège (2) de véhicule en étant protégée au moyen d'une ceinture (5) de sécurité ancrée dans la structure du véhicule comme élément de retenue passif supplémentaire, ledit module d'airbag comprenant au moins un générateur de gaz et un sac (1) de gaz, dans lequel le générateur de gaz introduit brusquement du gaz à la suite d'un signal de déclenchement,
**caractérisé** en ce que
le sac (1) de gaz est disposé de telle sorte et possède une forme telle qu'il capture la ceinture (5) de sécurité, à laquelle est donné du mou dès l'apparition du signal de déclenchement, la soulève de sa position d'application contre la personne (6) et, tandis que son volume augmente, consomme le mou de la ceinture, de sorte que la ceinture (5) de sécurité empêche le sac (1) de gaz totalement gonflé de basculer latéralement vers l'extérieur, ce qui fait que la région de la tête de la personne (6), une fois entrée en contact avec le sac (1) de gaz, ne quitte pour l'essentiel pas les contours de la cellule (8) d'habitacle du véhicule à moteur.

2. Système de retenue passif pour un véhicule à moteur, comportant au moins un module d'airbag associé à un siège (2) de véhicule, pour la protection latérale de la tête et éventuellement de la région tête-thorax d'une personne (6) assise dans le siège (2) de véhicule en étant protégée au moyen d'une ceinture (5) de sécurité intégrée dans le siège (2) de véhicule comme élément de retenue passif supplémentaire, ledit module d'airbag comprenant au moins un générateur de gaz et un sac (1) de gaz, dans lequel le générateur de gaz introduit brusquement du gaz à la suite d'un signal de déclenchement,
**caractérisé** en ce que le sac de gaz est disposé de telle sorte et possède une forme telle que, lorsqu'il est rempli, il remplit pour l'essentiel l'espace entre la ceinture de sécurité, à laquelle est donné du mou dès l'apparition du signal de déclenchement, et la personne, et consomme le mou de la ceinture, de sorte que la ceinture de sécurité empêche le sac (1) de gaz totalement gonflé de basculer latéralement vers l'extérieur, ce qui fait que la région de la tête de la personne (6), une fois entrée en contact avec le sac (1) de gaz, ne quitte pour l'essentiel pas les contours de la cellule (8) d'habitacle du véhicule à moteur.

3. Système de retenue passif suivant la revendication 1 ou 2, qui comporte un actionneur qui, par l'intermédiaire de l'enrouleur de la ceinture (5) de sécurité concernée, donne du mou à cette ceinture dès l'apparition du signal de déclenchement en désactivant son mécanisme de blocage, puis réactive le mécanisme de blocage de l'enrouleur de ceinture.

4. Système de retenue passif suivant l'une des revendications 1 à 3, dans lequel le sac (1) de gaz est intégré dans la structure du véhicule.

5. Système de retenue passif suivant l'une des revendications 1 à 3, dans lequel le sac (1) de gaz est intégré dans le siège (2) de véhicule.
